# EUROPEAN PATENT SPECIFICATION

(11) **EP 0 362 346 B1**
(45) Date of publication and mention of the grant of the patent: **04.08.1993**
(21) Application number: 89903978.8
(22) Date of filing: 31.03.1989
(51) Int. Cl.: G01M 17/00, G01L 5/28, B60P 3/00, B62D 63/06, B62D 63/08, G01M 17/04, G01M 17/06

(54) **VEHICLE INSPECTION TRAILER**
ANHÄNGER ZUR INSPEKTION VON FAHRZEUGEN
REMORQUE D'INSPECTION DE VEHICULE

(30) Priority: 31.03.1988 AU 7538/88
(43) Date of publication of application: 11.04.1990
(73) Proprietor: ROADS & TRAFFIC AUTHORITY OF NEW SOUTH WALES, Rosebery, NSW 2018 (AU)
(72) Inventor: VAUGHAN, Rodney, George, Greenwich, NSW 2065 (AU); FINDLAY, Russell, Kenneth, Jacaranda Avenue Bradbury, NSW 2560 (AU); JAKABEK, Ivan, Ermington, NSW 2115 (AU); RICHARDSON, Ralph, Mainbar, NSW 2230 (AU); McLACHLAN, Myles, John, Balmain, NSW 2041 (AU); VENN-BROWN, Geoffrey, Christopher, Lane Cove, NSW 2066 (AU)
(74) Representative: Sorrell, Terence Gordon
(86) International application number: AU8900141
(87) International publication number: WO8909386

(56) References cited:
- EP-A- 0 281 207
- AU-A- 1 074 976
- AU-A- 1 600 566
- AU-B- 1 742 762
- AU-B- 2 796 077
- AU-B- 7 572 881
- FR-A- 2 263 500
- FR-A- 2 400 699
- FR-A- 2 494 438
- GB-A- 1 441 413
- GB-A- 2 139 179
- US-A- 2 091 656
- US-A- 2 478 795
- US-A- 2 922 534
- US-A- 3 277 702
- US-A- 3 823 485
- Derwent Abstract Accession No. J1429X/37, Class R15, SU-A-492777 (KHARK AUTOMOB ROAD) 23 February 1976

## Description

### Background of the Invention

The present invention relates to apparatus for inspecting motor vehicles, and more particularly but not exclusively for inspecting public vehicles and motor lorries.

The Roads and Traffic Authority of New South Wales, Australia, conducts six-monthly and annual inspections of public vehicles (buses, taxis, etc) and heavy trucks respectively, together with random roadside monitoring inspections. These inspections are essential because of extremely poor maintenance of heavy vehicles when inspections are not conducted, and the involvement of these vehicles in fatal and serious crashes. Random and annual inspections have been proven effective in greatly improving heavy vehicle safety maintenance. There is growing interest in, and acceptance of, the need for random inspections of heavy vehicles. This is not only occurring in other Australian states, but also in Europe and in the United States.

### Discussion of Prior Art

Ideally, all vehicle safety inspections should be conducted using roller brake testing machines and steering/suspension testing machines, such as are installed in Department of Motor Trasnport Vehicle Inspection Stations. By definition, random roadside inspections cannot be undertaken at such stations. Furthermore, because of the geographic spread of vehicles, less than half of annual truck inspections (and six-monthly public vehicle inspections) are conducted at such stations.

Vehicles inspected away from stations are tested to a substantially lower standard in that they are not tested using roller-brake testing machines and steering/suspension testing machines. This is particularly important because braking faults constitute 50% of all major defects found, while steering/suspension faults amount to another 30% (these results are not only applicable in New South Wales, but are typical of those found around the world).

Standard roller brake testing machines are expensive, heavy and require substantial electrical power supplies. They also require installation pits to mount them such that vehicles can drive onto the machines, and to withstand reaction forces during brake tests. Steering/suspension testing machines require inspection pits to accommodate associated jacking of vehicles, and require electrical/air/hydraulic power supplies. They are also expensive.

One play detection apparatus is disclosed In US-A-3 823 485 from which it can be seen that such known devices require inspection pits and are consequently fixed at particular sites built for the purpose. A known type of brake testing machine is known from, for example GB-A-1 441 413. US-A-2 091 656 discloses a vehicle testing apparatus including both a brake testing assembly and a wheel alignment assembly. However, once again, the apparatus is fixed on site and is not movable. A mobile vehicle testing facility having a trailer containing a drive-on platform is disclosed in SU-A-492 777. In this facility, the trailer is jacked up to enable a vehicle to be tested to drive longitudinally up onto the platform. The platform includes means for testing the wheel brakes and for measuring the toe-in and camber of the front wheels.

Vehicle fleet owners have had their vehicles tested, in respect of braking and steering/suspension, at installations generally remote from their own premises and by an organisation not under their control. This leads to time lost, as the vehicle has to be driven to the installation, and the driver will most likely have to await for the vehicle to be tested before returning.

Accordingly there is a need for a vehicle testing and inspection facility suitable for the needs of vehicle fleet owners. It is the object of the present invention to overcome or substantially ameliorate the above disadvantages.

### Brief Summary of the Invention

Accordingly, the invention provides a vehicle inspection facility comprising a generally horizontally extending base frame having an axis and a steering and suspension play detection assembly including a jack to raise a test vehicle, a pair of movable members upon which front wheels of the test vehicle rest, and first motor means to move the movable members in unison in a first horizontal direction or a second horizontal direction transverse of the first horizontal direction;
wherein the facility is movable in the direction of said axis, and further comprises a brake testing assembly mounted transversely to said axis on said base frame and comprising two sub-assemblies arranged such that the wheels on an axle of a vehicle being tested are supported by the two sub-assemblies, each sub-assembly comprising at least two rollers adapted to engage a test vehicle wheel, said rollers being rotatably supported on said base frame so as to be rotatable about two generally parallel coextensive axles, second motor means for driving at least one of said rollers of each sub-assembly, and sensor means which provide an indication of the resistance applied to the driven roller by a braking system associated with the wheel being tested by the brake testing assembly, at least two wheels rotatably mounted on a support movable between an inspection position where the wheels are raised above a ground surface so that the base frame is resting on said ground surface, and a transport position where the base frame is supported on said wheels for enabling the facility to be transported and wherein said movable members of said steering and suspension play detection assembly are aligned transversely to said axis of said base frame with said two sub-assemblies of said brake testing assembly so that a vehicle being tested may move transversely to said axis of the base frame between said brake testing assembly and said steering and suspension play detection assembly.

### Brief Description of the Drawings

A preferred form of the present invention will now be described by way of example with reference to the accompany in drawings, wherein:
Figure 1 is a schematic perspective view of a mobile testing facility to test motor vehicles, with the facility in its transport configuration;
Figure 2 is a schematic perspective view of the facility of Figure 1, in its testing configuration;

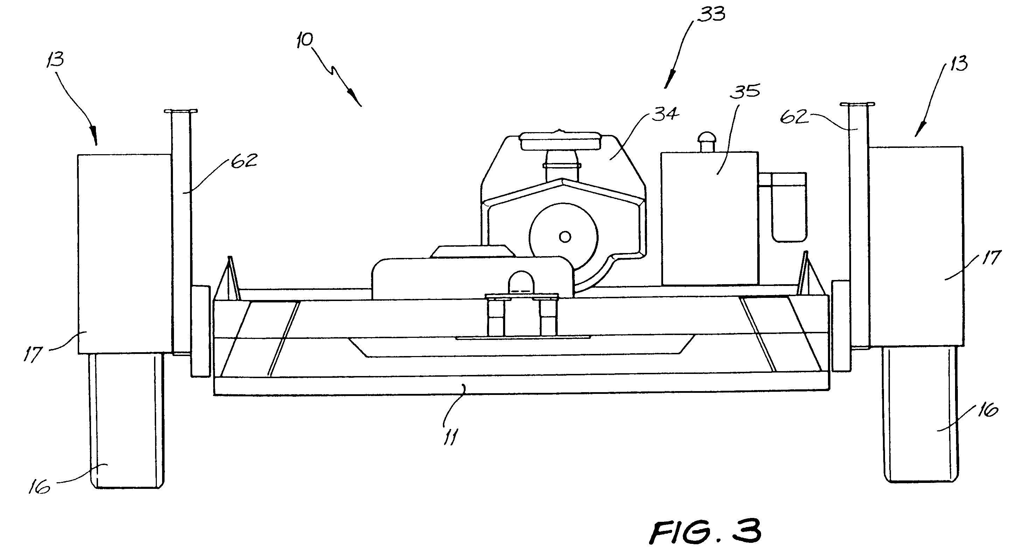

Figure 3 is a schematic front end elevation of the facility of Figure 1;

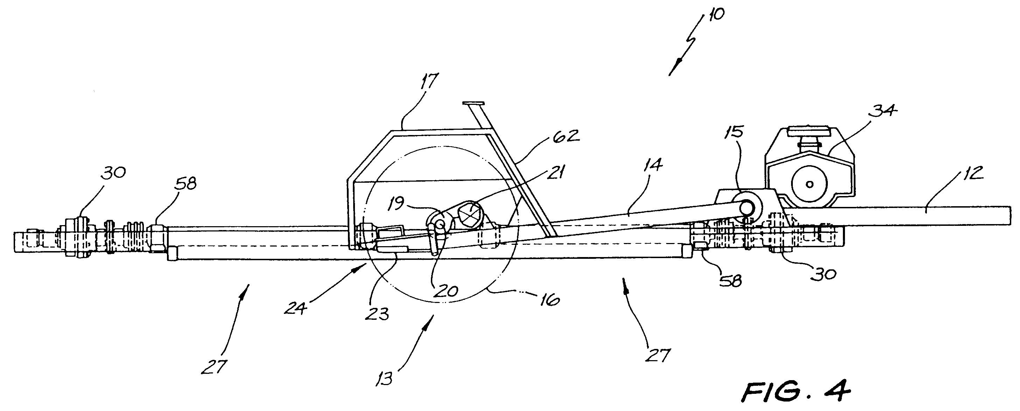

Figure 4 is a schematic side elevation of the facility of Figure 1;

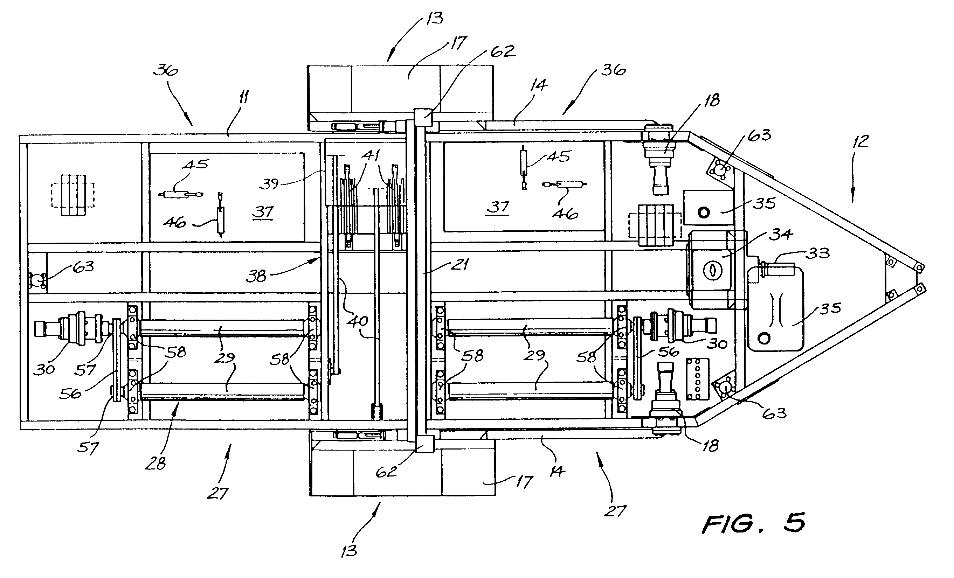

Figure 5 is a schematic top plan view of the facility of Figure 1;

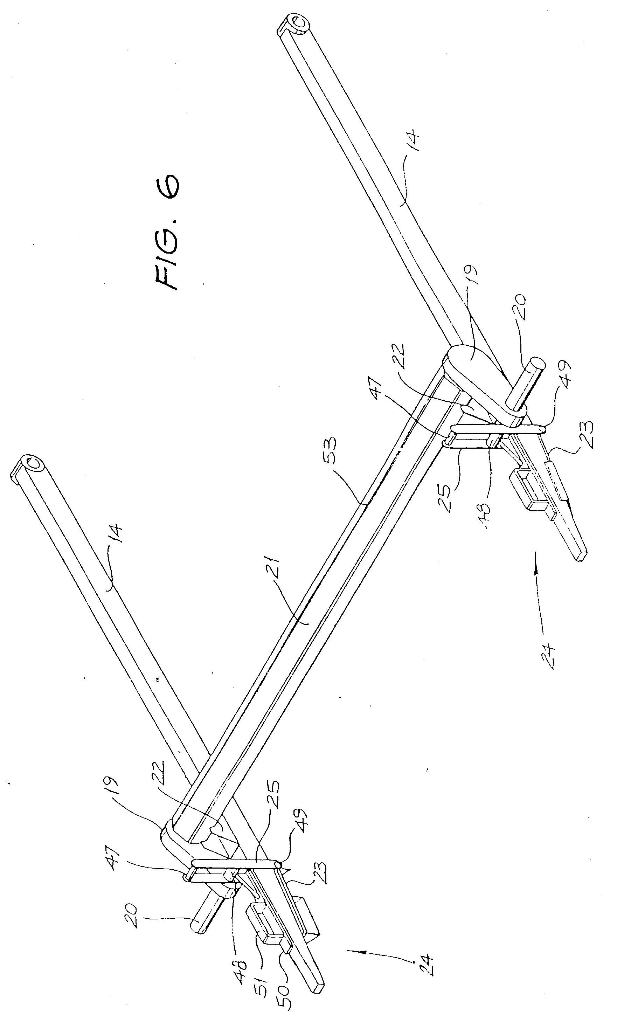

Figure 6 is a schematic perspective view of the suspension of the facility of Figure 1;

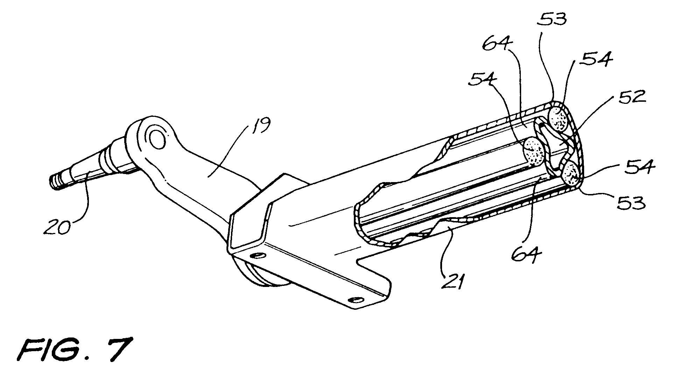

Figure 7 is a schematic sectioned elevation of the axle of the suspension of Figure 6;

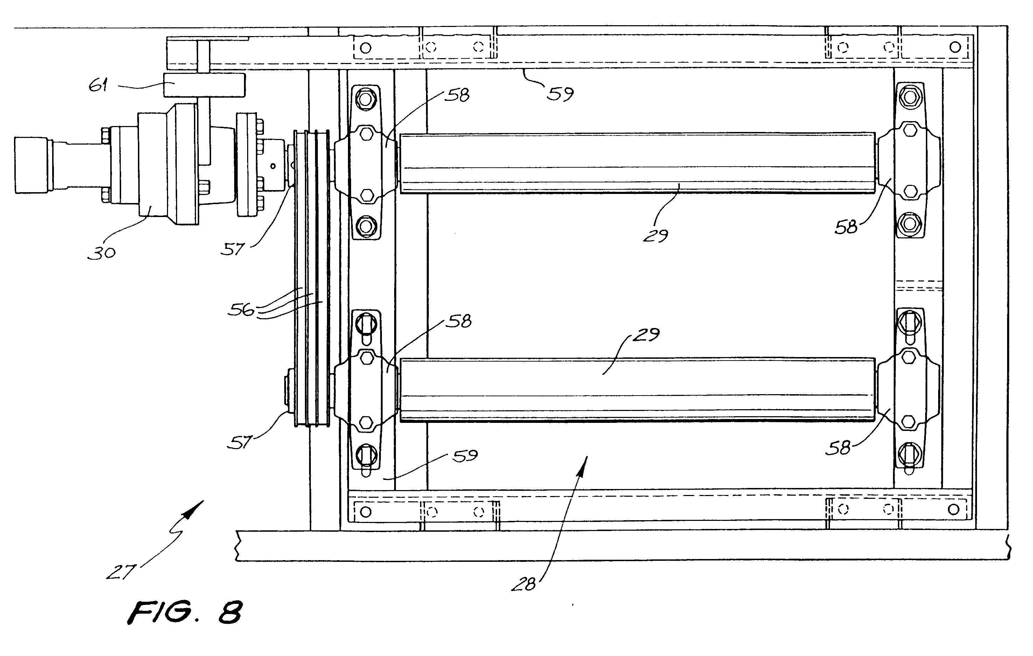

Figure 8 is a schematic top plan view of a brake testing assembly of the facility of Figure 1;

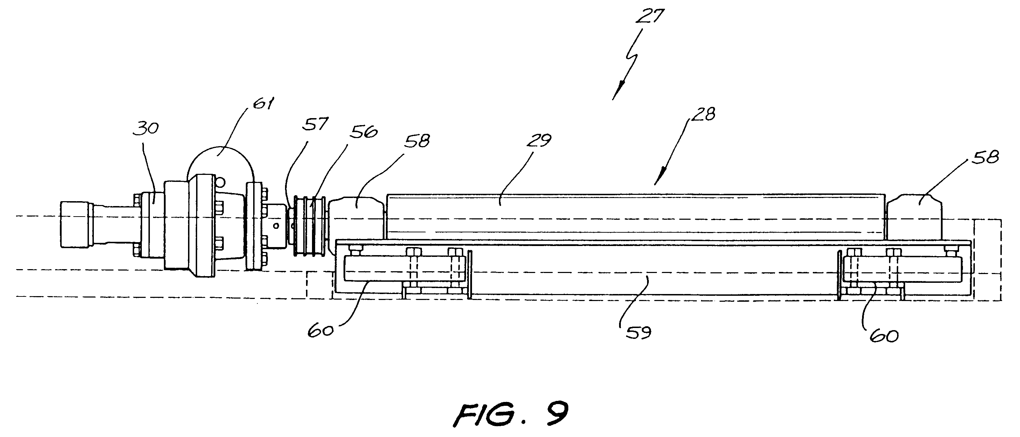

Figure 9 is a schematic side elevation of the assembly of Figure 8;

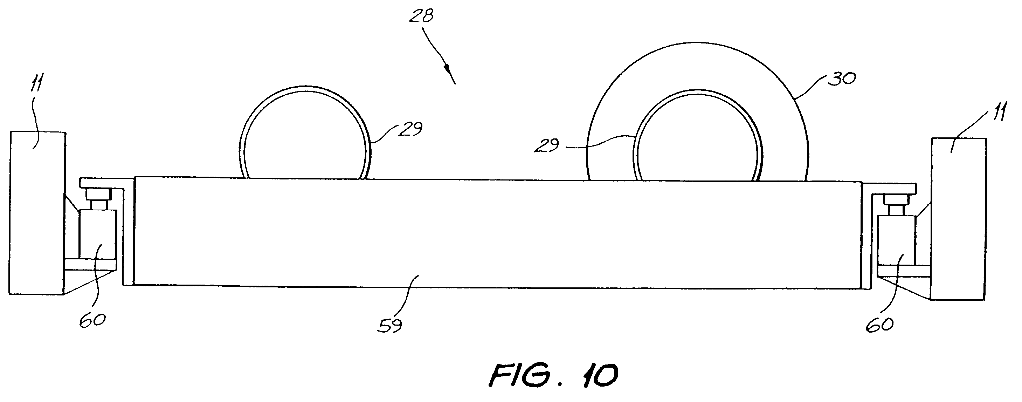

Figure 10 is a schematic end elevation of the assembly of Figure 9;
Figure 11 is a schematic side elevation of a suspension and steering testing assembly employed in the facility of Figure 1;

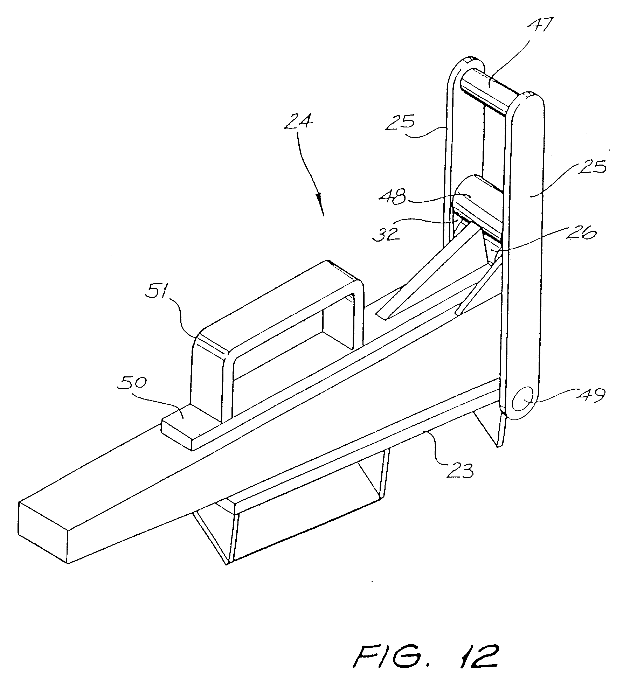

Figure 12 is a schematic perspective view of a clamp employed with the suspension of Figure 6; and

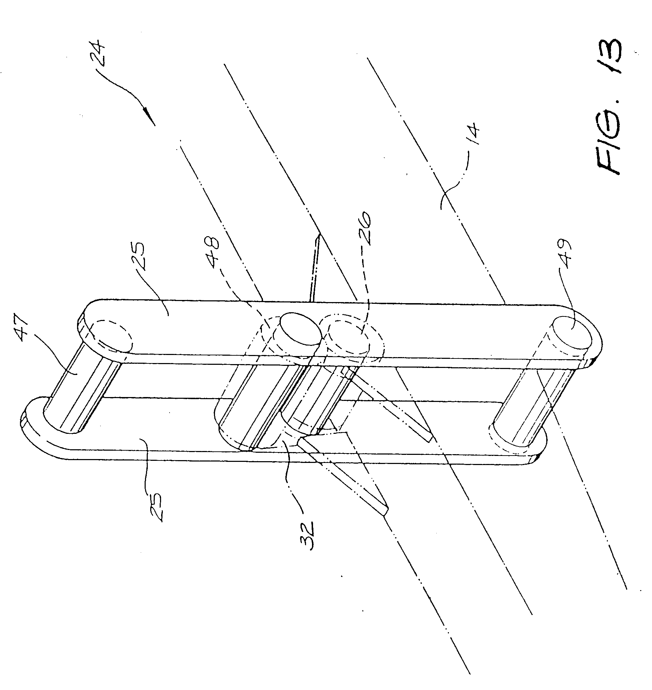

Figure 13 is a schematic perspective view of a portion of the clamp assembly of Figure 12.

### Description of the Preferred Embodiment

In the accompanying drawings there is schematically depicted a mobile facility 10 to text brakes, steering and suspensions of motor vehicles, particularly heavy vehicles and public vehicles. The facility 10 includes a base frame 11 having its forward end provided with a towing nitch 12 enabling the facility 10 to be towed by a motor vehicle. Mounted on the frame 11 are wheel assemblies 13, with each assembly 13 including an arm 14 pivotally mounted by means of a bearing assembly 15. The two bearing assemblies 15 provide for pivoting of the arms 14 about a common axis transverse of the general direction of travel of the facility 10. Rotatably mounted at the ends of the arms 14 are wheels 16 covered by guards 17.

The arms 14 are pivoted about their common pivot axis by means of hydraulic motors 18. the arms 14 are movable between a transport position with the wheels 16 engaging a ground surface and a raised position allowing the frame 11 to rest on the ground surface. Extending between the arms 14 and mounted thereon so as to be fixed thereto is an axle 21 which pivotally supports each of the wheel assemblies 13. Each wheel assembly 13 includes a pivot member 19 extending radially from the longitudinal axis of the axle 21, with each member 19 supporting a stub axle 20. The stub axle 20 supports bearings which rotatably support the associated wheel 16. The axle 21 is attached to the arms 14 via mountings 22. Fixed to the base frame 11 are two plates 23 which cooperate with clamps 24 to selectively secure the arms 14 to the base frame 11 when the facility 10 is in the transport mode of operation. Each clamp 24 includes a pair of links 25 pivotally mounted on the associated arm 14 via a roller 26. Also extending between the links 25 are rollers 47, 48 and 49, with the roller 49 being adapted to engage beneath the plate 23. Extending between the roller 26 and 48 are a pair of brackets 32 which pivotally attach the rollers 26 and 48, with the links 25 then being able to pivot about the roller 49. Also attached to the links 25 is a lever 50 provided with a handle 51. During use of the clamp assembly 24 the links 25 are manipulated by the user until the roller 48 engages with the plate 23. This is achieved by gripping the links at the roller 47. Once in this initial position, the handle 50 will be projecting up at an acute angle relative to the associated arm 14. The user then grabs the handle 51 and pushes the handle 51 towards the arm 14. This will cause pivoting of the links 25 to an "over centre" position retaining the roller 49 firmly sandwiching the plate 23 against the associated arm 14.

Each of the members 19 has extending from it a sub-axle 52 extending into the interior of the axle 21. The axle 21 is not of a circular transverse cross-section. More particularly it has longitudinally extending lobes 53 which provide longitudinally extending cavities to receive resilient elements 54. The sub-axle 52 has lobes 64 which also abut the resilient elements 54. Accordingly, rotation of the sub-axle 52 relative to the axle 21 is inhibited by the resilient elements 54.

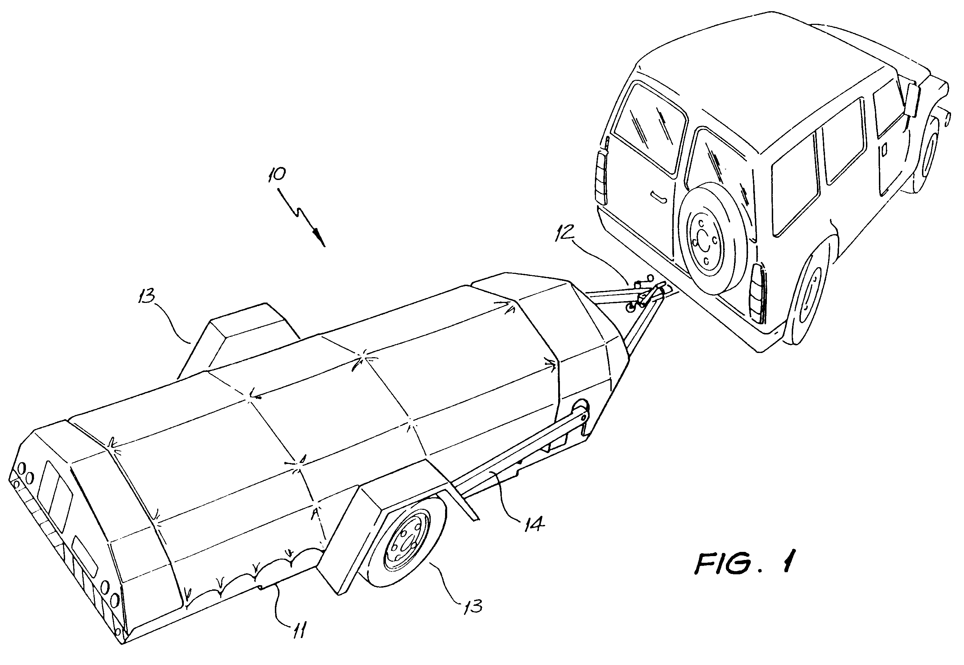

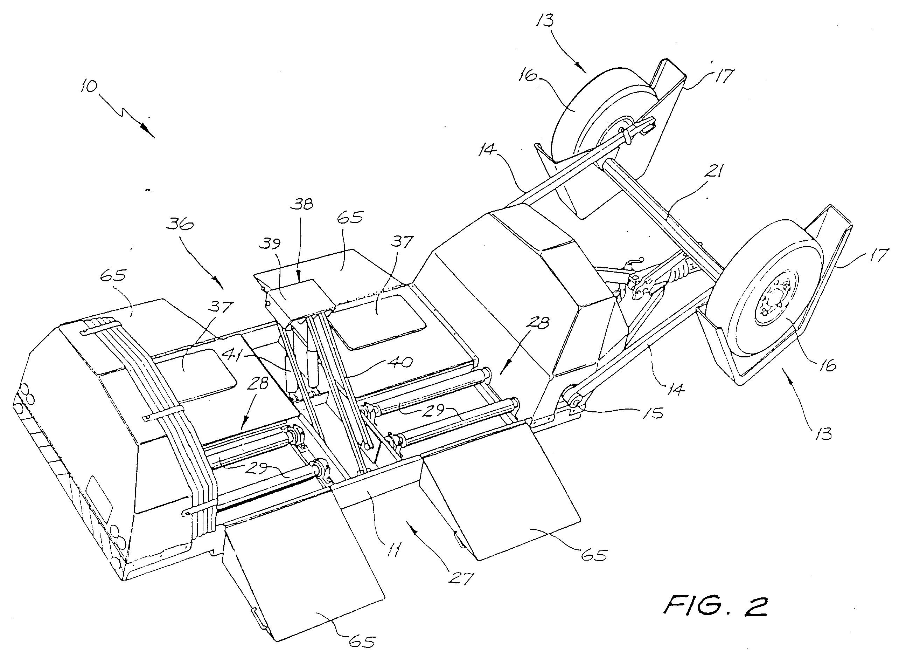

The wheel assemblies 13 are shown in their transport position, in Figure 1, while the wheel assemblies 13 are shown in a raised position in Figure 2, enabling the frame 11 to rest on a ground surface.

Mounted on the frame 11 is a roller brake testing assembly 27, including two sub-assemblies. The sub-assemblies provide two sets of rollers 28. Each set of rollers 28 includes two rollers 29. The rollers 29 are driven by means of hydraulic motors 30. Extending between each pair of rollers 29 are drive belts 56 extending between pulleys 57. Via the pulleys 57 and belts 56, driving motion is transferred between the two rollers 29. The rollers 29 are also supported by bearing blocks 58 supported on a sub-frame 59. The sub-frame 59 in turn is supported on load cells 60, which load cells can provide a signal indicative of the weight carried by the wheels being tested. In order to provide a reaction torque for the motors 30, there is provided a reaction member 61 extending to the sub-frame 59. The load cells 60 are each in turn supported on the base frame 11. The motors 30 receive hydraulic fluid under pressure from a pump 33 driven by a petrol engine 34. The pump 33 has associated with it a reservoir 35.

Also mounted on the frame 11 is a suspension/steering testing assembly 36 each having an upper horizontal wheel supporting surface, which includes a pair of plates 37 which are movably mounted on the frame 11 so as to be movable in a direction longitudinally of the facility 10, as well as transverse of the facility 10. The assembly 36 also includes a jack 38 having an upper plate 39 to engage and raise the forward end of the vehicle being tested. The jack 38 includes a parallelogram assembly 40 operated by hydraulic rams 41.

The plates 37 are each associated with a pair of hydraulic rams which move the plates 37 longitudinally or transverse of the facility 10. The plates 37 may be moved in unison either in the same direction or in opposite directions. The plates 37 provide horizontal surfaces which receive the wheels 16 of the vehicle to be tested.

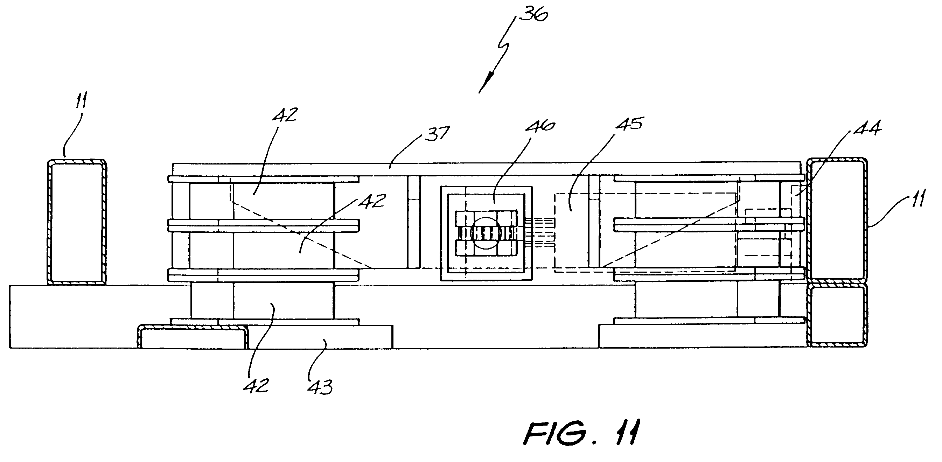

In Figure 11 one of the plates 37 is illustrated. The plate 37 is supported by a stack of resilient pads 42 further attached to a member 43. The plate 37 is moved by means of hydraulic rams 45 and 46, with the hydraulic ram 45 moving the plate 37 longitudinally of the facility 10, and the ram 46 moving the plate 37 transverse of the facility 10. There is positioned adjacent the plate 37 stop members 44 which restrict the downward movement of the plate 37. Initially when a vehicle wheel is located on the plate 37, the plate 37 moves downward until it engages a stop 44. Thereafter, the jack 38 is operated until the plate 37 is free for movement and is clear fo the stop 44. In this position, the wheels are in sufficient frictional contact with the plate 37 to move therewith or to slide relative thereto. Accordingly, a force is applied to the wheel biasing the wheel to move in the direction of movement of the plate 37.

Attachable to the longitudinal side edges of the frame 11 are ramp assemblies 65. The ramp assemblies 65 are long enough to ensure that any legal vehicle will not "ground" while crossing the trailer.

For compactness and ease of operation, the sets of rollers 28 are aligned transversely of the facility 10, with the plates 37.

In use of the brake testing assembly, the rollers 29 are driven via their hydraulic motors 30. The wheels of the vehicle under test, are braked and the torque applied by the motors 30 measured. This could be achieved by producing a signal proportional to the pressure delivered to the motors 30. Alternatively the load cells 60 could provide the signal. An electronic control system would then transfer the signal to an electronic control unit with a brake force and a brake balance readout. The unit could be a hand-held item. Preferably, the rollers 29 can be rotated in either direction. When the steering and suspension test is to be carried out, the operator activates the jack 38 to raise the vehicle so that the wheels under test are only just in engagement with the plates 37. Thereafter, the plates 37 are moved either longitudinally or transverse of the facility 10 to provide the operator with an indicator of the condition of the steering and suspension of the vehicle. The wheels would be biased to move with the plates 37 due to frictional contact therewith.

The above described form of the present invention provides a facility for testing motor vehicle brakes, steering and suspensions independently of a fixed station and their facilities and power supplies. However, it should be appreciated that it could be fixed to a particular site to provide a stationary facility.

Preferably, the facility is designed for legal towing by a light commercial vehicle. It can be towed to a site and placed in operation quickly and simply.

Preferably each of the arms 14 would be provided with a stand 62 which would support the wheel assemblies in the displace position depicted in Figure 2. This would then prevent the arms 14 providing a torque tending to raise the frame 11 from good frictional contact with the ground supporting surface. Preferably the portions of the frame 11 contacting the ground surface would be provided with a friction enhancing substance such as rubber or resilient plastics material to prevent movement of the device 11 during brake testing.

To raise the frame 11 when the wheels are being moved to their transport mode of operation, there is provided three hydraulic rams 63. These rams would also be actuated when the wheels are being moved to the raised test mode position of the facility 11.

## Claims

1. A vehicle inspection facility (10) comprising:
a generally horizontally extending base frame (11) having an axis; and
a steering and suspension play detection assembly (36) including a jack (38) to raise a test vehicle, a pair of movable members (37) upon which front wheels of the test vehicle rest, and first motor means (45, 46) to move the movable members (37) in unison in a first horizontal direction or a second horizontal direction transverse of the first horizontal direction;
characterised in that the facility (10) is movable in the direction of said axis, and further comprises:
a brake testing assembly (27) mounted transversely to said axis on said base frame (11) and comprising two sub-assemblies arranged such that the wheels on an axle of a vehicle being tested are supported by the two sub-assemblies, each sub-assembly comprising at least two rollers (29) adapted to engage a test vehicle wheel, said rollers (29) being rotatably supported on said base frame (11) so as to be rotatable about two generally parallel coextensive axles, second motor means (30) for driving at least one of said rollers (29) of each sub-assembly, and sensor means which provide an indication of the resistance applied to the driven roller (29) by a braking system associated with the wheel being tested by the brake testing assembly (27);
at least two wheels (16) rotatably mounted on a support (13) movable between an inspection position where the wheels (16) are raised above a ground surface so that the base frame (11) Is resting on said ground surface, and a transport position where the base frame (11) is supported on said wheels (16) for enabling the facility (10) to be transported;
wherein said movable members (37) of said steering and suspension play detection assembly (36) are aligned transversely to said axis of said base frame (11) with said two sub-assemblies of said brake testing assembly (27) so that a vehicle being tested may move transversely to said axis of the base frame (11) between said brake testing assembly (27) and said steering and suspension play detection assembly (36).

2. The facility of claim 1, wherein the wheels (16) are supported by a pair of transversely spaced arms (14) extending axially of the base frame (11) and pivotally mounted so as to be pivotable about a horizontal axis extending generally transverse to said axis of said base frame (11), and an axle (21) extending between said arms (14), which axle (21) is located above said base frame (11) and which supports said wheels (16).

3. The facility of claim 2, wherein said arms (14) are pivotable to move said wheels (16) from the transport position to a position spaced forward of said transport position so as to clear a passage for the vehicle being tested to move transversely to said axis of the base frame (11) between said brake testing assembly (27) and said steering and suspension plate detection assembly (36).

4. The facility of claim 3, wherein each sub-assembly is supported on said base frame (11) by a weight detection means (60), so that each weight detection means (60) can provide a signal indicative of the weight supported by the sub-assembly.

5. The facility of claim 3, wherein each sub-assembly includes a plurality of resilient pads (42) which movably support said movable members (37) for movement in said first and second horizontal directions, which pads (42) are compressible so that said members (37) are movable between an inoperative position when the full weight of a wheel is applied thereto, and an operative position when the load applied to said members (37) is reduced.

6. The facility of claim 1, wherein the first motor means (45, 46) includes a pair of rams, which extend in said first and second horizontal directions.

## Patentansprüche

1. Eine Vorrichtung (10) zur Inspektion von Fahrzeugen, mit:
einem sich im allgemeinen horizontal erstreckenden Grundrahmen (11) mit einer Achse; und
einer Einheit (36) zur Feststellung von Lenkungs- und Aufhängungsspiel mit einem Wagenheber (38) zum Anheben eines Prüffahrzeugs, einem Paar beweglicher Glieder (37), auf denen die Vorderräder eines Prüffahrzeugs ruhen, und ersten Motormitteln (45, 46) zum gleichförmigen Bewegen der beweglichen Glieder (37) in eine erste horizontale Richtung bzw. eine zweite horizontale Richtung quer zur ersten horizontalen Richtung;
dadurch gekennzeichnet, daß die Vorrichtung (10) in Richtung dieser Achse beweglich ist und weiterhin beinhaltet:
eine Bremsenprüfeinheit (27), die quer zu dieser Achse auf dem Grundrahmen (11) befestigt ist und zwei Untereinheiten aufweist, die so angeordnet sind, daß die Räder auf der Achse des zu prüfenden Fahrzeugs von den zwei Untereinheiten getragen werden, wobei jede Untereinheit mindestens zwei Laufrollen (29) aufweist, die zur Aufnahme eines Prüffahrzeugrades ausgelegt sind, und die Laufrollen (29) drehbar auf dem Grundrahmen (11) gelagert werden, so daß sie um zwei im allgemeinen parallel zueinander stehende, sich gleich erstreckende Achsen drehbar sind; zweite Motormittel (30) zum Antrieb mindestens einer dieser Laufrollen (29) jeder Untereinheit, und Fühlermittel, die den durch ein Bremssystem auf die angetriebene Rolle (29) ausgeübten Widerstand anzeigt, das dem durch die Bremsprüfeinheit (27) geprüften Rad zugeordnet ist;
mindestens zwei auf einer Halterung (13) drehbar befestigte Räder (16), die beweglich sind zwischen einer Inspektionsposition, in der die Räder (16) über eine Bodenfläche angehoben sind, so daß der Grundrahmen (11) auf dieser Bodenfläche ruht, und einer Transportposition, in der der Grundrahmen (11) auf diesen Rädern (16) ruht, so daß die Vorrichtung (10) transportiert werden kann;
worin diese beweglichen Glieder (37) der Einheit (36) zur Feststellung von Lenkungs- und Aufhängungsspiel quer zu der Achse des Grundrahmens (11) mit den zwei Untereinheiten der Bremsenprüfeinheit (27) angeordnet sind, so daß sich ein zu prüfendes Fahrzeug quer zur Achse des Grundrahmens (11) zwischen der Bremsenprüfeinheit (27) und der Einheit (36) zur Feststellung von Lenkungs- und Aufhängungsspiel bewegen kann.

2. Die Vorrichtung gemäß Anspruch 1, worin die Räder (16) durch ein Paar quer mit Abstand angeordneter Arme (14) gelagert werden, die sich axial zum Grundrahmen (11) erstrecken und um eine horizontale Achse schwenkbar montiert sind, die sich quer zur Achse des Grundrahmens (11) erstreckt, und sich eine Achse (21) zwischen diesen Armen (14) erstreckt, wobei diese Achse (21) über dem Grundrahmen (11) angeordnet ist und die Räder (16) lagert.

3. Die Vorrichtung gemäß Anspruch 2, worin die Arme (14) zum Bewegen der Räder (16) aus der Transportposition in eine nach vorne von der Transportposition beabstandete Position schwenkbar sind, so daß ein Weg für das zu prüfende Fahrzeug freigemacht wird, so daß es sich quer zur Achse des Grundrahmens (11) zwischen der Bremsprüfeinheit (27) und der Einheit (36) zur Feststellung von Lenkungs- und Aufhängungsspiel bewegen kann.

4. Die Vorrichtung gemäß Anspruch 3, worin jede Untereinheit auf dem Grundrahmen (11) durch ein Gewichterfassungsmittel (60) gelagert ist, so daß jedes Gewichterfassungsmittel (60) ein Signal liefern kann, das das von der Untereinheit getragene Gewicht angibt.

5. Die Vorrichtung gemäß Anspruch 3, worin jede Untereinheit eine Vielzahl von elastischen Puffern (42) aufweist, die die beweglichen Glieder (37) zur Bewegung in die erste und die zweite horizontale Richtung beweglich lagern, wobei die Puffer (42) zusammendrückbar sind, so daß die Glieder (37) zwischen einer Ruheposition, in der das volle Gewicht eines Rades auf ihnen lastet, und einer Betriebsposition, in der die auf die Glieder (37) ausgeübte Last verringert wird, beweglich sind.

6. Die Vorrichtung gemäß Anspruch 1, worin das erste Motormittel (45, 46) ein Paar Stellzylinder aufweist, die in der ersten bzw. in der zweiten horizontalen Richtung ausfahren.

## Revendications

1. Dispositif de contrôle de véhicules (10) comprenant :
- un cadre de base (11) sensiblement horizontal présentant un axe ; et
- un appareil (36) de détection de jeu dans la direction et dans la suspension comportant un vérin (38) pour lever un véhicule à contrôler, une paire d'organes mobiles (37) sur lesquels reposent les roues avant du véhicule à contrôler, et des premiers moyens moteurs (45,46) aptes à déplacer les organes mobiles (37) simultanément dans une première direction horizontale ou une deuxième direction horizontale transversale à la première ;
caractérisé en ce que le dispositif (10) est mobile dans la direction dudit axe, et
comprend en outre :
- un appareil (27) de contrôle de freins monté transversalement à cet axe sur le cadre de base (11) et comportant d'une part deux sous-ensembles disposés de telle sorte que les roues sur un même essieu du véhicule à contrôler soient supportées par les deux sous-ensembles, chaque sous-ensemble comprenant au moins deux rouleaux (29) prévus pour entrer en contact avec une roue du véhicule à contrôler, ces rouleaux (29) étant montés mobiles à rotation sur le cadre de base (11) de manière à pouvoir tourner autour de deux axes sensiblement parallèles et de même étendue, et d'autre part des seconds moyens moteurs (30) aptes à entraîner au moins l'un des rouleaux (29) de chaque sousensemble, ainsi que des moyens de détection fournissant une indication de la résistance appliquée au rouleau entraîné (29) par un système de freinage associé à la roue en train d'être contrôlée par l'appareil (27) de contrôle de freins ;
- au moins deux roues (16) montées à rotation sur un support (13) déplaçable d'une position de contrôle dans laquelle les roues (16) sont levées au-dessus de la surface du sol de telle sorte que le cadre de base (11) repose sur cette surface, et une position de transport dans laquelle le cadre de base (11) est supporté par ces roues (16) pour permettre au dispositif (10) d'être déplacé,
les organes mobiles (37) de l'appareil (36) de détection de jeu dans la direction et dans la suspension étant alignés transversalement par rapport à l'axe du cadre de base (11) avec les deux sous-ensembles de l'appareil (27) de contrôle de freins de telle sorte qu'un véhicule en train d'être contrôlé puisse être déplacé transversalement par rapport à l'axe du cadre de base (11) entre l'appareil (27) de contrôle de freins et l'appareil (36) de détection de jeu dans la direction et la suspension.

2. Dispositif selon la revendication 1, dans lequel les roues (16) sont portées d'une part par une paire de bras (14) espacés transversalement et orientés parallèlement à l'axe du cadre de base (11), les bras (14) étant montés à pivotement de manière à pouvoir être pivotés autour d'un axe horizontal orienté sensiblement transversalement à l'axe du cadre de base (11), et d'autre part par un essieu (21) s'étendant entre les deux bras (14), cet essieu (21) étant situé au-dessus du cadre de base (11) et portant les roues (16).

3. Dispositif selon la revendication 2, dans lequel les bras (14) sont articulés pour permettre aux roues (16) d'être déplacées de la position de transport à une position située en avant de la position de transport de manière à ménager un passage pour permettre au véhicule devant être contrôlé de se déplacer transversalement par rapport à l'axe du cadre de base (11) entre le dispositif (27) de contrôle des freins et le dispositif (36) de détection de jeu dans la direction et dans la suspension.

4. Dispositif selon la revendication 3, dans lequel chaque sous-ensemble est supporté par le cadre de base (11) par des moyens de mesure de poids (60) de façon que chacun de ces moyens (60) puissent fournir un signal indicatif du poids supporté par chaque sous-ensemble.

5. Dispositif selon la revendication 3, dans lequel chaque sous-ensemble comprend une pluralité de plots élastiques (42) supportant de manière mobile les organes mobiles (37) pour permettre des déplacements dans lesdites première et deuxième directions horizontales, ces plots (42) étant compressibles de telle sorte que ces organes (37) soient mobiles entre une position inactive lorsque le poids total d'une roue de véhicule lui est appliqué, et une position active lorsque le poids appliqué sur ces organes (37) est moindre.

6. Dispositif selon la revendication 1, dans lequel les premiers moyens moteurs (45,46) comportent une paire de vérins orientés dans lesdites première et deuxième directions horizontales.
